# FASCICULE DE BREVET EUROPEEN

(11) **EP 2 906 818 B1**
(45) Date de publication et mention de la délivrance du brevet: **20.07.2016**
(21) Numéro de dépôt: 13789718.7
(22) Date de dépôt: 15.10.2013
(51) Int. Cl.: F03D 1/02, F03D 13/25

(54) **AÉROGÉNÉRATEUR BIROTOR «EN V» SUR STRUCTURE FLOTTANTE DE TYPE SPAR**
WINDTURBINE AUF EINER SCHWIMMENDEN HOLMSTRUKTUR MIT ZWEI ROTOREN AUF V-FÖRMIGER STÜTZSTRUKTUR
WIND TURBINE ON A SPAR FLOATING STRUCTURE WITH TWO ROTORS ON A V-SHAPED SUPPORT STRUCTURE

(30) Priorité: 15.10.2012 FR 1202855
(43) Date de publication de la demande: 19.08.2015
(73) Titulaire: Sereo SAS, 44000 Nantes (FR)
(72) Inventeur: HERSKOVITS, André, F-75020 Paris (FR); LAFFITTE, Olivier, F-35760 Saint-gregoire (FR); THOME, Philippe, F-44300 Nantes (FR); TOBIE, Alain, F-44100 Nantes (FR)
(74) Mandataire: Vidon Brevets & Stratégie
(86) Numéro de dépôt international: PCT/EP2013/071538
(87) Numéro de publication internationale: WO 2014/060420

(56) Documents cités:
- EP-A1- 0 761 964
- WO-A1-98/32968
- WO-A1-2010/098814
- DE-A1-102010 040 887
- FR-A1- 2 868 483
- FR-A1- 2 938 306

## Description

### 1. Domaine technique de l'invention

L'invention est relative à la construction de centrales électriques éoliennes, destinées à être exploitées en mer, là où le vent est en moyenne plus fort et plus régulier, et là où les contraintes de voisinage sont les moins pénalisantes.

Des solutions d'éoliennes en mer fixées sur des fondations au sol existent déjà et permettent une exploitation jusqu'à environ 50m de profondeur.

Compte tenu des caractéristiques géographiques des pays (dont la France) dont les côtes présentent rapidement des fonds de profondeur supérieurs à 50m, il est judicieux de pouvoir disposer d'éoliennes flottantes.

### 2. Etat de la technique antérieure

Plusieurs types d'éoliennes flottantes sont actuellement à l'étude ou en développement :
- Type Barge flottante ou multi-flotteurs :
   L'éolienne est fixée sur une plate-forme semblable à une barge flottante ou bien sur une plate forme multi-flotteurs, d'où un volume de flottaison essentiellement en surface.
   L'ensemble est ancré au fond marin par des ancrages souples.

L'inconvénient de ce type d'architecture est une grande sensibilité aux vagues et à la houle, induisant des efforts dynamiques importants sur les nacelles éoliennes, incompatibles avec leurs fonctions.
- Type Flotteur semi-submersible :
   L'éolienne est installée sur un flotteur conçu pour minimiser la sensibilité à la houle. En effet, une grande partie du corps flottant est située sous l'eau.

L'inconvénient de ce type d'architecture est de nécessiter une masse importante de matériaux pour obtenir une bonne stabilité de l'ensemble, ce qui engendre un coût de production difficilement compatible avec sa fonction.
- Type TLP (en anglais « Tension Leg Platform ») :
   L'éolienne est située sur une structure flottante maintenue au moyen d'un ou plusieurs câbles tendus et ancrés dans le fond marin.

L'intérêt est de placer l'essentiel de la partie flottante « sous les vagues », d'où une meilleure stabilité dans la houle.

L'inconvénient pour le TLP porte sur le fait que le coût correspondant à la structure et aux ancrages est important et difficilement compatible avec sa fonction.

Les inventions de MM. Sieg (WO03/004869) et Buitendijk (WO02/052150) décrivent différentes structures d'éoliennes flottantes monorotor munies d'un flotteur et d'un lest.

L'invention de M. Torr Todman (GB2443886) décrit une architecture birotor en « T ».

L'invention de M. William Heronemus (US2003/168864) décrit une architecture trirotor en « V » où les rotors sont placés face au vent sur une structure flottante munie d'un système de flottaison et d'un lest.

Le brevet déposé par MM. Alexandroff (FR2752443 et EP0761964) présente une architecture en « V », avec un aérogénérateur « au vent » et l'autre « sous le vent ».

La demande de brevet français FR2938306 présente notamment un aérogénérateur birotor sur une structure flottante de type « flottant tendu ». Un inconvénient de cette technique est lié à la structure flottante de type « flottant tendu ». En effet, selon cette technique, la structure flottante est maintenue en position dans la mer par une ou plusieurs lignes d'ancrage tendues. La distance entre le sol et la structure flottante, légèrement coulée, est donc fixe. De ce fait, la structure flottante ne peut pas suivre naturellement le mouvement des vagues, et il est nécessaire de surélever les rotors par rapport au niveau de la mer pour éviter leur immersion lors de vagues importantes. Par ailleurs, une telle structure nécessite l'utilisation d'ancrage et de lignes d'ancrage relativement onéreux.

### 3. Exposé de l'invention

L'invention porte sur une architecture particulière d'éolienne flottante permettant d'améliorer les technologies connues à ce jour.

Les perfectionnements concernent particulièrement l'architecture générale de l'ensemble, ainsi que la combinaison de dispositifs particuliers.

Plus précisément, l'invention concerne un aérogénérateur birotor en « V » sur une structure flottante. Selon l'invention, la structure flottante est du type SPAR (en anglais « Single Point Anchor Reservoir »), comprenant un fût central muni d'un lest en sa partie basse (encore appelé flotteur), et pivotant sur elle-même afin d'orienter sa partie haute portant les deux rotors face au vent. De plus, l'aérogénérateur comprend au moins trois haubans, dont un câble supérieur reliant les deux rotors entre eux et deux câbles inférieurs reliant chacun un des rotors au fût central.

L'invention propose donc un nouvel aérogénérateur comprenant deux rotors au vent montés sur une structure en « V », elle-même montée sur une structure flottante du type SPAR.

Une telle structure flottante de type SPAR est classiquement formée d'un fût central, ou flotteur, muni d'un lest dans sa partie inférieure, et est maintenue en position par des lignes d'ancrage non tendues. Ainsi, une telle structure flotte comme un bouchon, et peut suivre le mouvement naturel des vagues.

De ce fait, il est possible de placer les rotors plus proches du niveau de l'eau (et donc plus bas que selon la technique décrite dans la demande de brevet français FR2938306 précitée, mettant en oeuvre une structure flottante de type « flottant tendu »), ce qui permet d'abaisser le centre de gravité de l'ensemble de la structure. On diminue ainsi également le poids de la structure en « V », ce qui permet de diminuer le volume du flotteur et donc la taille du lest, et par suite les coûts de fabrication.

En d'autres termes, l'architecture de type « SPAR » présente des avantages hydrodynamiques majeurs avec une stabilité très douce, gage de mouvements lents diminuant la sensibilité à la houle et aux vagues, notamment pour les parties électromécaniques sensibles (dont la hauteur au-dessus du plan d'eau aggrave déjà les accélérations dues aux chocs et aux mouvements dans la mer).

De plus, une telle structure est plus économique et durable qu'une structure de type « flottant tendu », et permet une implantation sur tous types de fond (roches, sable, vase).

On peut également noter que les rotors s'orientent naturellement selon l'invention, éventuellement en agissant sur leur pas, et n'exigent aucune réaction du support, qu'ils ne tendent pas à faire tourner en sens inverse de l'aérien.

Par ailleurs, l'utilisation d'un haubanage selon l'invention permet de reprendre les efforts dans le plan transversal et d'équilibrer le système.

En particulier, le haubanage comprend exactement trois haubans ou câbles, dont un câble supérieur reliant directement les deux rotors au dessus du fût central / mât et deux câbles inférieurs reliés au fût central / mât équilibrant le système.

Par exemple, les moments dans le plan transversal, autour de l'axe longitudinal, sont repris par le haubanage, un câble supérieur reliant directement les deux rotors au dessus du mât et deux câbles inférieurs repris au niveau d'une couronne d'orientation équilibrant le système.

Cette structure intrinsèquement assez rigide peut être précontrainte pour minimiser encore les vibrations. Elle est avantageuse sur le plan aérodynamique (faible traînée), et favorise la stabilité en limitant le poids dans les hauts.

De plus, un tel contour auto-tendu formé par les trois câbles permet de reprendre les efforts dans un plan, et non dans un axe.

Finalement, un intérêt du birotor est de mutualiser les éléments de structure et d'ancrage, particulièrement coûteux, et par conséquent d'obtenir un coût de production plus avantageux par rapport à une solution mono rotor.

Un autre intérêt du birotor est de pouvoir « densifier » la production d'énergie, les rotors devant normalement être éloignés de 3 à 5 fois leur diamètre afin d'éviter les perturbations aérodynamiques émises en aval d'un rotor. Il est ainsi possible selon l'invention de produire davantage de puissance électrique pour une superficie d'exploitation donnée, et par conséquent d'obtenir de meilleures performances économiques. Chacun des rotors est placé face au vent, le couple de renversement induit par leur masse permet de contrer le couple généré par la poussée du vent sur les rotors, ce qui permet de réduire avantageusement la taille du lest.

Un autre intérêt de l'aérogénérateur proposé est qu'il permet, grâce à la position des lignes d'ancrage près de la flottaison, une maintenance simplifiée et un moment inclinant diminué.

Ainsi, l'invention repose sur l'association :
- d'une structure flottante lestée SPAR, qui présente l'avantage d'être plus économique qu'une structure multi-flotteurs (moins d'acier utilisé), mais qui présente aussi l'inconvénient majeur d'être relativement instable (sensibilité à la houle et aux vagues).
- avec une structure birotor en « V », s'orientant naturellement, afin de capter le maximum de vent, autour du fût central (éventuellement à l'aide d'un système d'accouplement rotatif proche de la surface de l'eau), qui permet à l'ensemble d'acquérir un meilleur comportement dynamique et une meilleure réponse aux contraintes imposées simultanément par les variations de sens du vent et par les mouvements induits par les vagues et la houle, en diminuant l'interaction aérodynamique/hydrodynamique de l'ensemble. En particulier, selon un des modes de réalisation, le fait que le système d'accouplement rotatif soit proche de la surface de l'eau (à la base du « V ») assure une meilleure stabilité à l'ensemble, en atténuant les couples mécaniques induits par les contraintes dynamiques imposées par les vagues et la houle sur les structures et sur le système d'accouplement rotatif.

Cette invention présente donc l'avantage remarquable de construire à moindre coût un système éolien flottant s'orientant naturellement et en permanence dans le vent même en présence de houle et de vagues, produisant ainsi davantage de puissance électrique moyenne. Il est ainsi possible selon l'invention de produire davantage de puissance électrique moyenne pour une superficie d'exploitation donnée, avec des structures à moindre coût.

On note que l'énergie (électricité) ainsi produite peut ensuite être acheminée par câble ou stockée sur place, par exemple après transformation chimique pour produire de l'hydrogène, du méthane, etc.

Selon une caractéristique particulière de l'invention, la structure des oeuvres mortes (i.e. la structure située au dessus de l'eau) qui soutient les deux rotors comprend au moins quatre barres de flèches (par exemple 4, 6 ou 8).

Ces barres de flèches peuvent être en métal ou en composites, et plus ou moins profilées.

En particulier, la structure des oeuvres mortes qui soutient les deux rotors comprend exactement quatre barres de flèches, deux pour chaque rotor.

La structure des oeuvres mortes qui soutient les deux rotors est ainsi constituée en partie de quatre barres de flèches, en métal ou en composites et plus ou moins profilé, deux pour chaque rotor, de façon à reprendre l'effort fléchissant autour des axes vertical et transversal du à la masse propre et à l'action du vent sur les pales (trainée) ainsi qu'aux actions indirectes de la mer. Autrement dit, lorsque que le vent souffle sur les pales, la barre de flèche au vent travaille en traction, celle sous le vent travaille en compression.

Ces barres de flèches peuvent être encastrées sur le haut du fût central / mât profilé.

Par exemple, les deux barres de flèches soutenant un rotor sont tubulaires, et sont positionnées en V ouvert, avec la pointe du V au niveau du rotor. Ceci permet notamment d'améliorer l'aérodynamisme de la structure.

Selon une autre caractéristique de l'invention, les deux rotors sont contrarotatifs, cette caractéristique étant avantageuse car elle permet d'annuler les efforts gyroscopiques induits sur les structures.

Selon une autre caractéristique de l'invention, il suffit d'une légère dissymétrie de traînée d'un rotor par rapport à l'autre pour provoquer un angle de pivotement. Cette caractéristique est particulièrement intéressante car elle autorise le pilotage de l'orientation de la partie haute de l'ensemble, pour la placer face au vent, uniquement en faisant varier différemment le pas des pales des deux rotors. Il est alors inutile d'implanter un lourd et coûteux dispositif d'orientation mécanique avec moteur et engrenages.

Selon une autre caractéristique de l'invention, il suffit d'une légère dissymétrie de traînée d'un rotor par rapport à l'autre pour provoquer un angle de pivotement. Cette caractéristique est particulièrement intéressante car elle autorise le pilotage de l'orientation de la partie haute de l'ensemble, pour la placer face au vent, uniquement en faisant varier le pas des pales d'un des deux rotors. Il est alors inutile d'implanter un lourd et couteux dispositif d'orientation mécanique avec moteur et engrenages.

Le système d'orientation de l'aérogénérateur au vent par le pas jouant sur la trainée des pales ne nécessite pas de moteur ni de transmissions à l'intérieur du fût central / mât. Mais surtout, agissant directement sur l'aérien, il n'exige aucune réaction du support, qu'il ne tend pas à faire tourner en sens inverse de l'aérien, ce qui est repris par les fondations pour les dispositifs fondés, ou par les lignes d'ancrage tendues pour les d'autres éoliennes flottantes (notamment de type flottant-tendu). Un tel système d'orientation par le pas est donc plus adapté à l'utilisation de lignes d'ancrage non tendues, moins coûteuses et permettant une implantation sur tous types de fond (roches, sable, vase).

En particulier, chaque rotor peut comprendre une pale, deux pales, trois pales ou plus. Le nombre de pales peut être différent d'un rotor à l'autre. Par exemple, chaque rotor comprend deux pales. Ceci permet notamment de diminuer le coût du rotor, et de limiter la masse en partie haute de la structure.

Selon une autre caractéristique de l'invention, les rotors peuvent être de type bipales. Cette caractéristique est particulièrement intéressante car elle facilite le transport à l'horizontal de l'aérogénérateur, sur terre et sur mer, par un encombrement moindre.

Selon une autre caractéristique de l'invention, l'aérogénérateur pourra être assemblé à terre sur un simple terre plein, puis transporté à terre à l'horizontal à l'aide de chariots jusqu'au quai de mise à l'eau.

Selon une autre caractéristique de l'invention, l'aérogénérateur pourra être transporté sur l'eau à l'horizontal, jusqu'au lieu d'exploitation, à l'aide d'une barge ou d'un bateau de transport. Cette solution présente l'avantage de ne pas nécessiter de grue lourde pour le transport et l'assemblage de l'aérogénérateur (éolienne).

Selon une autre caractéristique de l'invention, le lest peut être constitué de matériaux recyclables ou recyclés, sable, agrégats, graves de béton concassé et gravats issus du BTP, etc. Cela permet d'être plus efficace qu'un lest liquide tout en étant aussi écologique.

Selon une autre caractéristique de l'invention, la commande de l'orientation de la partie haute de l'ensemble à partir du pilotage du pas génère une oscillation de l'éolienne autour de son axe vertical, créant de façon alternative un supplément/déficit de vent sur un des rotors. Ce phénomène de création de vent artificiel ou "pompage" permet d'augmenter l'efficacité de l'éolienne par vent faible.

Selon un premier mode de réalisation de l'invention, le fût central comprend une portion immergée et une portion non immergée, la portion non immergée étant mobile par rapport à la portion immergée et reliée à la portion immergée par une couronne d'orientation, et les câbles inférieurs relient chacun un des rotors à la portion mobile du fût central.

Selon ce mode de réalisation, la portion immergée est maintenue en position par les lignes d'ancrage non tendues. Elle ne peut donc pas pivoter sur elle-même. La portion non immergée est quant à elle mobile, et permet à la structure flottante de pivoter autour du fût central pour orienter les deux rotors comme souhaité, afin d'orienter sa partie haute face au vent.

La couronne d'orientation selon ce mode de réalisation forme un système d'accouplement rotatif, situé à la base du « V » de l'aérogénérateur birotor en « V ».

On note qu'aucune technique de l'art antérieur ne fait référence à l'association d'une structure munie d'un système de flottaison et d'un lest, avec un birotor en « V » (avec deux rotors au vent) s'orientant face au vent autour d'un axe central à l'aide d'un système d'accouplement rotatif situé à la base du « V ».

Selon un deuxième mode de réalisation, le fût central est entièrement mobile, et est muni d'un anneau formant couronne, auquel sont attachées les lignes d'ancrage.

Ainsi, il est possible de monter les lignes d'ancrage directement sur un anneau formant couronne, laissant ainsi l'ensemble du flotteur tourner sur lui-même. Il est alors possible de supprimer la couronne d'orientation, pièce onéreuse et fragile.

Selon encore un autre mode de réalisation, la structure flottante pivote sur elle-même autour d'un fût fixe situé au dessus de l'eau, afin d'orienter sa partie haute face au vent.

Selon une autre caractéristique de l'invention, il est possible de dévier vers le haut le sillage aérodynamique produit par les nacelles, en orientant les deux nacelles vers le bas d'un angle d'environ 10 degrés. Il est alors possible de densifier la production électrique, l'éolienne birotor en aval n'étant plus perturbée par le sillage de celle en amont.

L'invention concerne encore un aérogénérateur birotor tel que décrit précédemment isolé ou constituant une centrale éolienne offshore de toute puissance.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1A est une vue d'ensemble de l'aérogénérateur birotor « en V » sur une structure flottante de type SPAR ;
- la figure 1B est une vue de face de l'aérogénérateur birotor « en V » sur une structure flottante de type SPAR ;
- la figure 2 représente une ferme éolienne constituée de plusieurs éoliennes birotor ;
- la figure 3 représente une vue de face de plusieurs configurations de tirants d'eau (lest court, lest long) ;
- la figure 4 représente l'orientation vers le bas des deux nacelles ;
- la figure 5 représente le fonctionnement de l'éolienne en mode pompage.

### 5. Description d'un mode de réalisation de l'invention

Le principe général de l'invention repose sur l'association d'un aérogénérateur birotor en « V » et d'une structure flottante de type SPAR, mettant en oeuvre un haubanage spécifique.

Plus précisément, la structure flottante de type SPAR comprenant un fût central muni d'un lest en sa partie basse, et pivote sur elle-même afin d'orienter sa partie haute portant les deux rotors face au vent. De plus, un aérogénérateur selon l'invention comprend au moins trois haubans, dont un câble supérieur reliant les deux rotors entre eux et deux câbles inférieurs reliant chacun un desdits rotors au fût central.

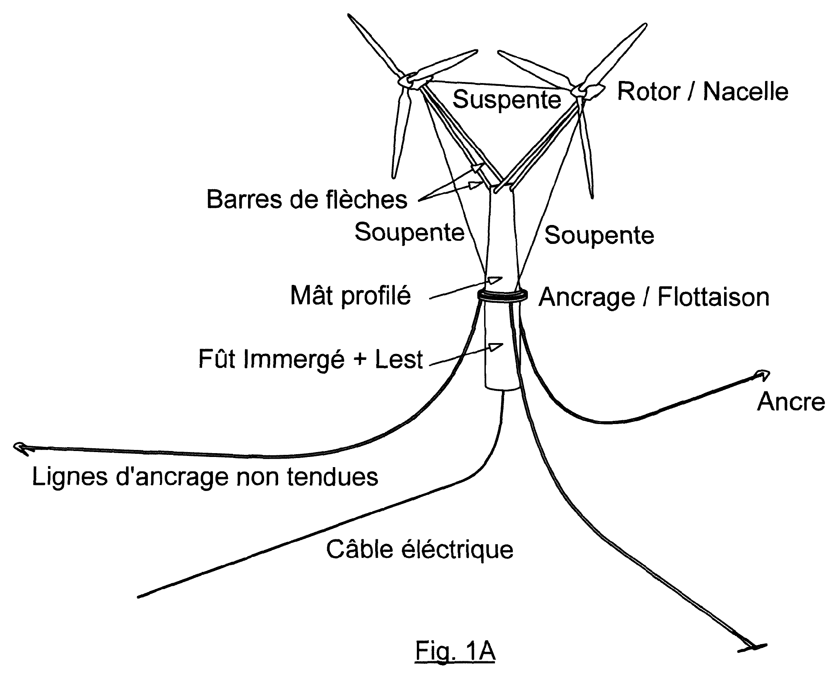

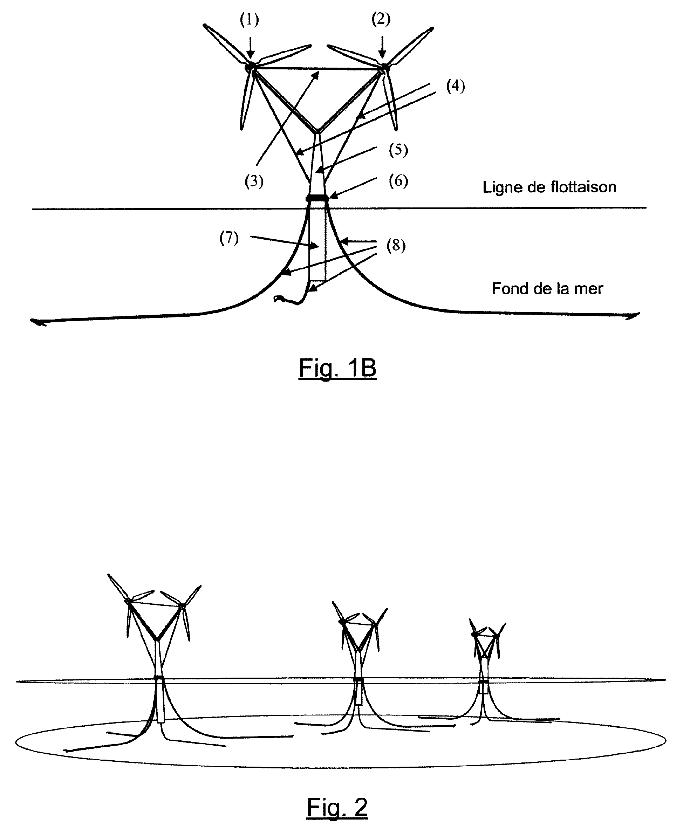

On décrit ci-après, en relation avec les figures 1A et 1B, un premier exemple de réalisation de l'invention selon lequel le haubanage met en oeuvre trois câbles.

Selon cet exemple, le fût central comprend d'une part une portion immergée 7, comprenant le lest, et une partie non immergée, encore appelée mât 5. Le mât est mobile par rapport au fût immergé 7 au niveau d'une couronne d'orientation 6.

La structure flottante est maintenue dans l'eau en utilisant des lignes d'ancrage non tendues 8.

Plus précisément, un aérogénérateur tel qu'illustré en figures 1A et 1B comprend deux nacelles, munies chacune d'un rotor 1, 2 montées sur une structure en « V ». Selon cet exemple, les deux rotors 1, 2 sont chacun maintenus par deux barres de flèches, qui peuvent être encastrées sur le haut du mât profilé 5. Selon un autre exemple, une charnière est prévue en bas des barres de flèches, de façon à pouvoir les replier lors du transport de l'aérogénérateur. Lorsque que le vent souffle sur les pales, la barre de flèche au vent travaille en traction, celle sous le vent travaille en compression.

De plus, trois câbles sont prévus pour reprendre les moments dans le plan transversal, autour de l'axe longitudinal, et équilibrer la structure.

Un câble supérieur 3, également appelé suspente, permet de relier les deux rotors.

Des câbles inférieurs 4, encore appelés soupentes, permettent de relier chacun des rotors au mât profilé 5.

La structure peut s'orienter naturellement, afin d'orienter sa partie haute (mât 5, rotors 1, 2 et haubanage 3, 4) face au vent.

En particulier, il est possible d'agir sur le pas des pales des deux rotors pour régler l'orientation des rotors.

Selon un deuxième exemple, non illustré, le fût central est entièrement mobile. Dans ce cas, un anneau formant couronne est placé autour du fût, et les lignes d'ancrage sont reliées à cet anneau. De ce fait, le fût peut pivoter autour de son axe central, tout en étant maintenu par les lignes d'ancrage reliées à l'anneau. Par exemple, l'anneau tourne dans un rail prévu sur le fût central.

La figure 2 représente une ferme éolienne constituée de plusieurs éoliennes birotor selon l'invention.

En effet, les aérogénérateurs selon l'invention peuvent être utilisés isolément, ou faire partie de centrales électriques éoliennes offshores de toutes puissances, de configurations linéaires ou concentrées du type ferme éolienne.

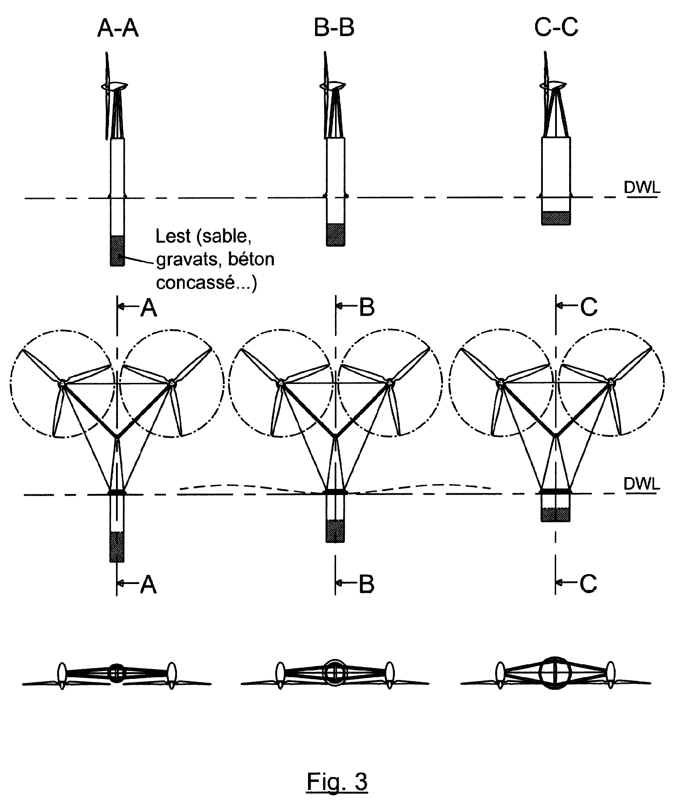

La figure 3 représente une vue de face de plusieurs configurations de tirants d'eau (lest court, lest long), selon l'exemple décrit en relation avec les figures 1A et 1B.

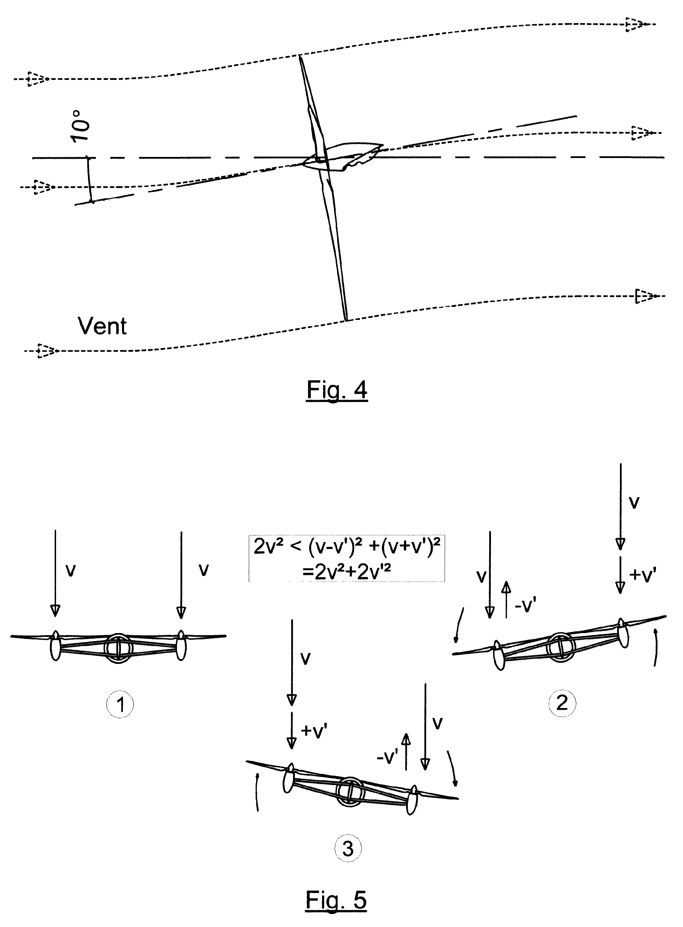

La figure 4 représente l'orientation vers le bas des deux nacelles.

En effet, comme indiqué ci-dessus, il est possible de dévier vers le haut le sillage aérodynamique produit par les nacelles, en orientant les deux nacelles vers le bas d'un angle d'environ 10 degrés.

La figure 5 représente le fonctionnement de l'éolienne en mode pompage.

En effet, il est possible selon l'invention de générer une oscillation de l'éolienne autour de son axe vertical (i.e. autour du fût central), créant de façon alternative un supplément/déficit de vent sur un des rotors, grâce à la commande de l'orientation de la partie haute de l'ensemble à partir du pilotage du pas génère. Ce phénomène de création de vent artificiel ou "pompage" permet d'augmenter l'efficacité de l'éolienne par vent faible.

## Revendications

1. Aérogénérateur birotor en « V » sur une structure flottante, comprenant deux rotors montés chacun à une extrémité d'une structure en « V », **caractérisé en ce que** la structure flottante est du type SPAR, comprenant un fût central muni d'un lest en sa partie basse (7), et pivotant sur elle-même afin d'orienter sa partie haute, portant les deux rotors (1, 2), face au vent,
et **en ce qu'**il comprend au moins trois haubans, dont un câble supérieur (3) reliant les deux rotors (1, 2) entre eux et deux câbles inférieurs (4) reliant chacun un desdits rotors audit fût central.

2. Aérogénérateur birotor selon la revendication 1, **caractérisé en ce qu'**il comprend exactement trois haubans.

3. Aérogénérateur birotor selon l'une quelconque des revendications 1 et 2, **caractérisé en ce que** la structure des oeuvres mortes qui soutient les deux rotors (1, 2) comprend au moins quatre barres de flèches.

4. Aérogénérateur birotor selon la revendication 3, **caractérisé en ce que** la structure des oeuvres mortes qui soutient les deux rotors comprend exactement quatre barres de flèches, deux pour chaque rotor.

5. Aérogénérateur birotor selon l'une quelconque des revendications 1 à 4, **caractérisé en ce que** les deux rotors sont contrarotatifs.

6. Aérogénérateur birotor selon l'une quelconque des revendications 1 à 5, **caractérisé en ce que** les deux rotors sont à pas variable et que l'on commande l'orientation de la partie haute de l'ensemble par rapport à la direction du vent en faisant varier séparément le pas des rotors.

7. Aérogénérateur birotor selon l'une quelconque des revendications 1 à 5, **caractérisé en ce que** l'un des rotors est à pas fixe et l'autre à pas variable et que l'on commande l'orientation de la partie haute de l'ensemble par rapport à la direction du vent en faisant varier le pas de l'un des deux rotors.

8. Aérogénérateur birotor selon l'une quelconque des revendications 1 à 7, **caractérisé en ce qu'**il est transporté à terre à l'horizontal à l'aide de chariots jusqu'au quai de mise à l'eau, puis transporté à l'horizontal sur un bateau ou une barge de transport.

9. Aérogénérateur birotor selon l'une quelconque des revendication 1 à 8, **caractérisé en ce que** le lest est constitué de matériaux recyclables ou recyclés, sable, agrégats, graves de béton concassé et gravats.

10. Aérogénérateur birotor selon l'une quelconque des revendications 6 et 7, **caractérisé en ce que** la commande de l'orientation de la partie haute de l'ensemble à partir du pilotage du pas génère une oscillation de l'aérogénérateur autour de son axe vertical, créant de façon alternative un supplément/déficit de vent sur un des rotors.

11. Aérogénérateur birotor selon l'une quelconque des revendications 1 à 10, caractérisé en ce ledit fût central comprend une portion immergée (7) et une portion non immergée (5), ladite portion non immergée étant mobile par rapport à la portion immergée et reliée à la portion immergée par une couronne d'orientation (6), et en ce que lesdits câbles inférieurs (4) relient chacun un desdits rotors à ladite portion non immergée dudit fût central.

12. Aérogénérateur birotor selon l'une quelconque des revendications 1 à 10, **caractérisé en ce que** ledit fût central est entièrement mobile, et est muni d'un anneau formant couronne, auquel sont attachées les lignes d'ancrage.

13. Aérogénérateur birotor selon l'une quelconque des revendications 1 à 12 **caractérisé en ce que** les deux nacelles sont orientées vers le bas d'un angle d'environ 10 degrés.

14. Aérogénérateur birotor selon les revendications précédentes isolé ou constituant une centrale éolienne offshore de toute puissance.

## Patentansprüche

1. V-förmige Windturbine mit zwei Rotoren auf einer schwimmenden Struktur, umfassend zwei Rotoren, die jeweils an einem Ende einer V-förmigen Struktur angebracht sind, **dadurch gekennzeichnet, dass** die schwimmende Struktur vom SPAR-Typ ist, die einen zentralen Schaft, der an seinem unteren Teil (7) mit einem Ballast ausgestattet ist, aufweist und sich um sich selbst dreht, um ihren oberen Teil, der die zwei Rotoren (1, 2) trägt, nach dem Wind auszurichten,
und dadurch, dass sie mindestens drei Haltetaue aufweist, von denen ein oberes Tau (3) die zwei Rotoren (1, 2) untereinander verbindet und zwei untere Taue (4) jeweils einen der Rotoren mit dem zentralen Schaft verbinden.

2. Windturbine mit zwei Rotoren nach Anspruch 1, **dadurch gekennzeichnet, dass** sie genau drei Haltetaue aufweist.

3. Windturbine mit zwei Rotoren nach einem der Ansprüche 1 und 2, **dadurch gekennzeichnet, dass** die Struktur der Oberwasserteile, die die zwei Rotoren (1, 2) trägt, mindestens vier Ausleger aufweist.

4. Windturbine mit zwei Rotoren nach Anspruch 3, **dadurch gekennzeichnet, dass** die Struktur der Oberwasserteile, die die zwei Rotoren trägt, genau vier Ausleger, zwei für jeden Rotor, aufweist.

5. Windturbine mit zwei Rotoren nach einem der Ansprüche 1 bis 4, **dadurch gekennzeichnet, dass** die zwei Rotoren gegenläufig drehend sind.

6. Windturbine mit zwei Rotoren nach einem der Ansprüche 1 bis 5, **dadurch gekennzeichnet, dass** die zwei Rotoren verstellbar sind und dass die Ausrichtung des oberen Teils der Baugruppe in Bezug auf die Windrichtung gesteuert wird, indem die Blattverstellung der Rotoren separat variiert wird.

7. Windturbine mit zwei Rotoren nach einem der Ansprüche 1 bis 5, **dadurch gekennzeichnet, dass** einer der Rotoren nicht verstellbar und der andere verstellbar ist und dass die Ausrichtung des oberen Teils der Baugruppe in Bezug auf die Windrichtung gesteuert wird, indem die Blattverstellung des einen der zwei Rotoren variiert wird.

8. Windturbine mit zwei Rotoren nach einem der Ansprüche 1 bis 7, **dadurch gekennzeichnet, dass** sie an Land mit Hilfe von Rollwagen bis zum Kai des Zuwasserlassens horizontal transportiert wird und dann auf einem Schiff oder einer Transporteinrichtung horizontal transportiert wird.

9. Windturbine mit zwei Rotoren nach einem der Ansprüche 1 bis 8, **dadurch gekennzeichnet, dass** der Ballast aus recycelbaren oder recycelten Materialien, Sand, Aggregaten, Kies aus Betonschotter und Bauschutt erstellt ist.

10. Windturbine mit zwei Rotoren nach einem der Ansprüche 6 und 7, **dadurch gekennzeichnet, dass** das Steuern der Ausrichtung des oberen Teils der Baugruppe ausgehend von dem Steuern der Blattverstellung eine Schwingung der Windturbine um ihre vertikale Achse erzeugt, wodurch alternativ ein Zusatz/Defizit an Wind auf einem der Rotoren erzeugt wird.

11. Windturbine mit zwei Rotoren nach einem der Ansprüche 1 bis 10, **dadurch gekennzeichnet, dass** der zentrale Schaft einen untergetauchten Abschnitt (7) und einen nicht untergetauchten Abschnitt (5) aufweist, wobei der nicht untergetauchte Abschnitt relativ zu dem untergetauchten Abschnitt beweglich ist und mit dem untergetauchten Abschnitt durch einen Drehkranz (6) verbunden ist, und dass die unteren Taue (4) jeweils einen der Rotoren mit dem nicht untergetauchten Abschnitt des zentralen Schafts verbinden.

12. Windturbine mit zwei Rotoren nach einem der Ansprüche 1 bis 10, **dadurch gekennzeichnet, dass** der zentrale Schaft vollständig beweglich ist und mit einem einen Kranz bildenden Ring ausgestattet ist, an dem die Verankerungsleitungen befestigt sind.

13. Windturbine mit zwei Rotoren nach einem der Ansprüche 1 bis 12, **dadurch gekennzeichnet, dass** die zwei Gondeln um einen Winkel von ungefähr 10 Grad nach unten gerichtet sind.

14. Windturbine mit zwei Rotoren nach den vorhergehenden Ansprüchen, die isoliert ist oder einen Offshore-Windpark mit voller Leistung bildet.

## Claims

1. Twin-rotor wind turbine in the shape of a "V" on a floating structure, said wind turbine comprising two rotors each mounted at one end of a V-shaped structure, **characterised in that** the floating structure is of the SPAR type which comprises a central body equipped with a ballast at its lower part (7) and pivots on itself in order to orientate its upper part, which carries the two rotors (1, 2), to face the wind,
and **in that** said wind turbine comprises at least two stays, including an upper cable (3) which connects the two rotors (1, 2) to one another and two lower cables (4) which each connect one of the said rotors to the said central body.

2. Twin-rotor wind turbine according to Claim 1, **characterised in that** it comprises exactly three stays.

3. Twin-rotor wind turbine according to either of Claims 1 or 2, **characterised in that** the structure of the dead works that supports the two rotors (1, 2) comprises at least four spreaders.

4. Twin-rotor wind turbine according to Claim 3, **characterised in that** the structure of the dead works that supports the two rotors comprises exactly four spreaders, two for each rotor.

5. Twin-rotor wind turbine according to any one of Claims 1 to 4, **characterised in that** the two rotors are contra-rotating.

6. Twin-rotor wind turbine according to any one of Claims 1 to 5, **characterised in that** the two rotors have variable pitch and that the orientation of the upper part of the assembly in relation to the wind direction is controlled by causing the pitch of the rotors to vary separately.

7. Twin-rotor wind turbine according to any one of Claims 1 to 5, **characterised in that** one of the rotors has a fixed pitch and the other has a variable pitch and that the orientation of the upper part of the assembly in relation to the wind direction is controlled by causing the pitch of one of the two rotors to vary.

8. Twin-rotor wind turbine according to any one of Claims 1 to 7, **characterised in that** it is transported horizontally on land with the aid of wagons as far as the launching quay, and then transported horizontally on a transporting barge or boat.

9. Twin-rotor wind turbine according to any one of Claims 1 to 8, **characterised in that** the ballast is made up of recyclable or recycled materials, sand, aggregates, crushed concrete granular material and rubble.

10. Twin-rotor wind turbine according to either of Claims 6 or 7, **characterised in that** the control of the orientation of the upper part of the assembly based on control of the pitch generates an oscillation of the wind turbine around its vertical axis, creating extra wind/a deficit of wind, alternately, on one of the rotors.

11. Twin-rotor wind turbine according to any one of Claims 1 to 10, **characterised in that** the said central body comprises a submerged portion (7) and a non-submerged portion (5), the said non-submerged portion being movable in relation to the submerged portion and connected to said submerged portion by a slewing crown (6), and **in that** the said lower cables (4) each connect one of the said rotors to the said non-submerged portion of the said central body.

12. Twin-rotor wind turbine according to any one of Claims 1 to 10, **characterised in that** the said central body is fully mobile and is equipped with a ring forming a crown to which the anchoring lines are attached.

13. Twin-rotor wind turbine according to any one of Claims 1 to 12, **characterised in that** the two pods are oriented downwards by an angle of about 10 degrees.

14. Twin-rotor wind turbine according to the preceding claims, on its own or constituting a full-capacity offshore wind power station.
